# EUROPÄISCHE PATENTSCHRIFT

(11) **EP 2 090 804 B1**
(45) Veröffentlichungstag und Bekanntmachung des Hinweises auf die Patenterteilung: **26.10.2011**
(21) Anmeldenummer: 08002927.5
(22) Anmeldetag: 18.02.2008
(51) Int. Cl.: F16G 3/08, A01F 15/07

(54) **Verbindung zweier Enden eines Fördergurts sowie Verwendung einer derartigen Verbindung**
Connection of two ends of a conveyor belt and use of such a connection
Connection de deux extrémités d'une bande de transport et utilisation d'une telle connection

(43) Veröffentlichungstag der Anmeldung: 19.08.2009
(73) Patentinhaber: MATO Maschinen- und Metallwarenfabrik Curt Matthaei GmbH & Co KG, 63071 Offenbach (DE)
(72) Erfinder: Herold, Wolfgang, 63075 Offenbach (DE)
(74) Vertreter: Quermann, Helmut

(56) Entgegenhaltungen:
- DE-A1- 4 116 084
- GB-A- 727 511
- US-A- 19 318
- US-A- 3 748 698
- US-A- 4 558 492

## Beschreibung

Die Erfindung betrifft eine Verbindung zweier Enden eines Fördergurts, wobei die Enden des Fördergurts, im Wesentlichen über die gesamte Breite des Fördergurts, mittels Platten verbunden sind und die Platten auf der Ober- und Unterseite des Fördergurts angeordnet sind, sowie mit Mitteln zum Befestigen der Platten am Fördergurt, wobei die Befestigungsmittel den Fördergurt im Bereich dessen Enden durchsetzen und der Fördergurt ein Einlagengurt ist, der eine mittlere Gewebelage sowie eine obere und eine untere Deckschicht aufweist, sowie die Gewebelage im Bereich der Enden des Fördergurts durch Entfernen der Deckschichten freigelegt ist und die Enden des Fördergurts überlappend angeordnet sind.

Eine Verbindung zweier Enden eines Fördergurts ist aus der EP 0 957 290 A1 bekannt. Sie findet Verwendung bei einem Fördergurt, der zum Fördern von schweren, unregelmäßig geformten Materialien bzw. Gegenständen vorgesehen ist, insbesondere dem Fördern von Kohle, Erz usw.. Auf der Seite, auf der zu förderndes Gut auf dem Fördergurt aufliegt, ist die Verbindung der beiden Enden des Fördergurts mit einer Abdeckung versehen. Hierdurch soll ein erhöhter Verschleiß der Platten unter Einwirkung der geförderten Materialien vermieden werden.

Bei der bekannten Verbindung sind die freien Stirnkanten der Enden des Fördergurts Stoß an Stoß angeordnet. Die jeweilige Platte liegt entweder an der Deckschicht an oder es ist die Deckschicht teilweise entfernt, zur Aufnahme der Platte und der Abdeckung. Befestigt werden die im Bereich der beiden Deckschichten angeordneten Platten mittels Krampen, die durch den Fördergurt getrieben sind.

Verbindungen zweier Enden eines Fördergurts, wobei die freien Stirnkanten der Enden Stoß an Stoß angeordnet sind und die Verbindung mittels beidseitig des Fördergurts angeordneter Platten und Befestigungsmitteln erfolgt, sind ferner aus der EP 0 518 144 A1 und EP 0 596 219 A1 bekannt. In letztgenannter Schrift ist beschrieben, für jedes Gurtende ein Zugelement vorzusehen, das zwischen der Ober- und/Unterseite des Fördergurts angeordnet ist und sich quer zur Förderrichtung des Gurts erstreckt. Dieses Zugelement hat die Aufgabe, die beim Auftreten von Druckkräften wirksam werdenden Horizontalverformungen des Gurtsmaterials zu stabilisieren, um eine Wellenbildung oder eine bogenförmige Verformung der Stirnkante des Gurtendes zu verhindern.

In der US 834,273 ist eine Verbindung zweier Enden eines Lederriemens beschrieben, wobei die Enden des Lederriemens überlappend angeordnet und im Wesentlichen über die gesamte Überlappungslänge zwischen Platten gepresst sind, wobei Befestigungsmittel die Platten verbinden und den Ledergurt durchsetzen. Die sich überlappenden Enden des Ledergurts sind in ihrer Stärke nicht reduziert, sodass die Verbindung insgesamt hoch baut und es sich beim Übergang vom einen Ende des Lederriemens zum anderen Ende des Lederriemens eine Stoßkante ergibt.

In der Landwirtschaft finden sogenannte Rundballenpressen Verwendung. Diese dienen dem Zweck, Heu, Stroh oder Grassilage zu Ballen zu pressen. Diese Ballen können somit platzsparend gelagert werden. Ballenpressen werden in aller Regel von einem Traktor gezogen und über eine Zapfwelle angetrieben. Es ist beispielsweise eine Rundballenpresse der Firma John Deere Vertrieb, Zweigniederlassung der Deere & Company, John-Deere-Straße 8, D-76646 Bruchsaal (Modell Nr. 572, 582, 592) bekannt, mit der dichte Ballen erzeugt werden kann. Bei dieser Rundballenpresse wird das geerntete Gut auf direktem Weg in eine variable Presskammer gefördert. Dort greifen dann breite Fördergurte mit rautenförmiger Oberfläche das Erntegut und formen einen dichten und festen Ballen. Die Fördergurte liegen sehr dicht beieinander und decken so nahezu die vollständige Breite des Ballens ab. Hierdurch kann selbst feinstes Emtegut verlustfrei aufgenommen und perfekt gepresst werden.

Bei aus der Praxis bekannten Rundballenpressen wird der jeweilige Fördergurt beispielsweise als Endlosband produziert, somit mit vulkanisierten oder verspleissten Enden. Um ein solches Endlosband bzw. eine Vielzahl nebeneinander angeordnete Endlosbänder in der Rundballenpresse zu montieren, ist es erforderlich, einen seitlichen Zugang des Trommelsystems der Rundballenpresse freizuhalten. Dies ist bei der Erstmontage der Rundballenpresse unproblematisch, aber unter dem Aspekt der Reparatur, somit des Ersatzes des Endlosbandes, sehr nachteilig, weil die Rundballenpresse zu demontieren ist. In der Praxis finden demzufolge bei Rundballenpressen auch Fördergurte Verwendung, die mit dem jeweiligen Gurtende verbundene Gurtverbinder aufweisen, die, in überlappender Stellung angeordnet, mittels eines Kupplungsstabs verbunden werden. Bei einer solchen Verbindung sind die Verbinder und der Kupplungsstab aber einem erhöhten Verschleiß ausgesetzt, insbesondere aufgrund der mit dem Emtegut aufgesammelten Steine, Dreckpartikel usw.. Demzufolge ist die Standzeit einer solcher Verbindung nur unzureichend.

Eine Verbindung, die gemäß den Merkmalen der eingangs genannten Art gestaltet ist, ist aus der DE 41 16 084 A1 bekannt. Diese Verbindung findet bei einer Rundballenpresse Verwendung. Bei dieser sind die Platten als auf der Oberseite und Unterseite des Fördergurts angeordnete Leisten ausgebildet, die sich über die gesamte Breite des Fördergurts erstrecken und mittels einer Vielzahl von Nieten befestigt werden. Diese Nieten durchsetzen die Leisten und die Gewebelagen und sind hintereinander in Querrichtung des Fördergurts orientiert.

Aufgabe der vorliegenden Erfindung ist es, eine einfach gestaltete Verbindung zweier Enden eines Fördergurts zu schaffen, die verschleißfest ist und überdies unter Geräuschaspekten beim Umlenken des Fördergurts im Bereich einer Trommel optimiert ist, des Weiteren eine optimale Zugkraftübertragung im Bereich der überlappenden freien Enden der Gewebelagen sicherstellt. Ferner soll eine besondere Verwendung einer solchen Verbindung angegeben werden.

Gelöst wird die Aufgabe bei einer Verbindung der eingangs genannten Art dadurch, dass zwischen die freigelegten Enden des Fördergurts mindestens ein Draht, Stab oder Seil eingelegt ist, der in Breitenrichtung des Fördergurts angeordnet ist.

Durch die erfindungsgemäße Gestaltung der Verbindung wird erreicht, dass nur in dem Bereich des Fördergurts,- in dem die Gewebelage freigelegt ist, die Verbindung der beiden Gurtenden erfolgt. Hierdurch ergibt sich unmittelbar eine Verbindung im Bereich desjenigen Bestandteils des Gurts, der die Übertragung der Zugkräfte im Gurt bewirkt. Im Bereich der beiden Enden des Fördergurts liegt die Gewebelage aufgrund der überlappenden Anordnung doppellagig und es kontaktieren sich die beiden Lagen. Die beiden Lagen werden zwischen den beidseits der Lagenanordnung befindlichen Platten gepresst, die mittels der Befestigungsmittel miteinander verbunden sind.

Durch diese Anordnung der in zwei Lagen angeordneten, somit überlappend angeordneten Gewebelage und die Verbindung mittels der starren oberen und unteren Platten, wobei über die Breite des Gurts nebeneinander, dicht an dicht, mehrere obere Platten und mehrere untere Platten angeordnet sein können, wird ein Zweigelenk geschaffen. Das eine Gelenk ergibt sich zwischen dem dem einen Ende des Fördergurts zugeordneten, in seiner Stärke nicht reduzierten Bereich des Fördergurts und dem diesem zugewandten Ende der Plattenanordnung, das andere Gelenk zwischen dem anderen Ende der Plattenanordnung und dem in seiner Stärke nicht reduzierten Bereich des anderen Endes des Fördergurts. Diese Gestaltung stellt sicher, dass der Fördergurt, unabhängig, ob dessen untere Deckschicht um eine Umlenktrommel bewegt wird oder dessen obere Deckschicht um eine Umlenktrommel bewegt wird, immer präzise im Bereich der Umlenktrommel umgelenkt wird, ohne dass erhebliche Stöße im Bereich der Platte beim Bewegen entlang der Umlenktrommel zu verzeichnen sind. Hierdurch ergibt sich ein günstiges Geräuschverhalten der Verbindung im Bereich der Umlenktrommel. Da die Platten quasi in einem Hinterschnitt zwischen den in der Dicke nicht reduzierten Bereichen des Fördergurts angeordnet ist, ist die Verbindung zu dem Verschleiß optimiert. Vom Fördergurt gefördertes Material bleibt somit nicht im Bereich der Verbindung hängen und es ist im übrigen die Verbindung keinem erhöhten Verschleiß durch dieses Material ausgesetzt.

Bei der erfindungsgemäßen Verbindung ist ferner, zur weiteren Verbesserung der Übertragung der Zugkräfte im Bereich der Verbindung, zwischen die überlappend angeordnete Gewebelage mindestens ein Draht, ein Stab oder Seil eingelegt, der bzw. das in Breitenrichtung des Fördergurts angeordnet ist. Dieser Draht oder dergleichen ist formschlüssig zwischen den querverlaufenden Gewebestrukturen der in zwei Schichten angeordneten Gewebelage angeordnet, womit über diesen Formschluss eine Verbesserung der Zugkraftübertragung im Bereich der überlappenden freien Enden der Gewebelage sichergestellt ist.

Die erfindungsgemäße Verbindung erlaubt, bezogen auf die Längsrichtung des Fördergurts, die Verbindungslänge der beiden Enden des Fördergurts sehr gering zu halten. Dies ist insbesondere von Vorteil beim Umlenkrollen, die einen relativ kleinen Durchmesser aufweisen. Solche Umlenkrollen finden insbesondere bei Rundballenpressen Verwendung.

Unter diesem Aspekt wird die bevorzugte Verwendung der erfindungsgemäßen Verbindung bei einer Rundballenpresse gesehen.

Bei der Verbindung der beiden Enden des Fördergurts findet insbesondere ein Fördergurt Verwendung, dessen Deckschichten aus Gummi bestehen. Gummideckschichten ermöglichen eine besonders gute Mitnahmefähigkeit für Erntegut aufgrund der relativ großen Reibkräfte, die zwischen der Gummideckschicht und dem Erntegut übertragen werden können. Insbesondere ist vorgesehen, dass die eine Deckschicht eine größere Stärke aufweist als die andere Deckschicht. Die die größere Stärke aufweisende Deckschicht weist beispielsweise auf der der mittleren Gewebelage abgewandten Seite eine Profilierung, insbesondere eine rautenförmige Profilierung auf. Durch diese Profilierung lässt sich die Mitnahmefähigkeit weiter verbessern.

Es wird als besonders vorteilhaft angesehen, wenn sich die freigelegten Enden des Fördergurts vollständig überlappen, derart, dass das jeweilige freigelegte eine Ende des Fördergurts benachbart der zugewandten Deckschicht im Bereich des anderen Endes des Fördergurts angeordnet ist. Durch diese maximale Überlappung zwischen den Bereichen des Fördergurts, die nicht in einer Stärke reduziert sind, wird eine besonders große Fläche geschaffen, im Bereich der Kräfte über die befestigten Platten in die überlappend angeordnete Gewebelage eingeleitet werden können. Abgesehen von diesen somit übertragbaren Reibkräften erfolgt eine weitere Zugkraftübertragung über die die Gewebelage durchsetzenden Befestigungsmittel.

Die jeweilige Platte kann auf unterschiedliche Art und Weise mit der korrespondierenden, auf der anderen Seite der Gewebelage angeordneten Platte verbunden sein, beispielsweise mittels Nieten, Schrauben, Krampen oder dergleichen. Eine Nietverbindung wird als besonders vorteilhaft angesehen, weil sie dauerhaft sicher ist und, bezogen auf die Stärke des Förderbands, recht flach bauen kann. Die jeweilige Platte besteht insbesondere aus Metall, womit eine hohe Steifigkeit der Platte gegeben ist.

Vorzugsweise ist die jeweilige Platte im Wesentlichen eben gestaltet. Sie weist insbesondere in einem, bezogen auf die Laufrichtung des Fördergurts, vorlaufenden und/oder nachlaufenden Bereich einen zur Gurtmitte gerichteten gekrümmten Querschnitt auf. Dieser den gekrümmten Querschnitt aufweisende Bereich der Platte hintergreift bevorzugt das freie Ende der mittleren Gewebelage und stellt damit einen Übergang von dieser zu dem in der Stärke nicht reduzierten angrenzenden Bereich des Fördergurts dar und deckt die freie Stirnkante der Gewebelage ab. Durch diese Gestaltung ist die Verbindung und insbesondere der Übergangsbereich von der freigelegten Gewebelage zu dem nicht freigelegten Bereich des Fördergurts verschleißoptimiert und es ergibt sich eine zusätzliche Verbesserung des Geräuschverhaltens des Fördergurts im Bereich der Verbindung bei dem Umlenken des Fördergurts im Bereich einer Umlenkrolle.

Die Platten sind insbesondere so gestaltet, dass sie die freigelegten Enden des Fördergurts, bezogen auf die Längserstreckung des Fördergurts, vollständig abdecken. Hierdurch ist ein Schutz des freigelegten Endes des Fördergurts bezüglich des vom Fördergurt geförderten Materials optimiert. Auf jeder Fördergurtseite sind vorzugsweise mehrere Platten nebeneinander angeordnet, insbesondere dicht an dicht angeordnet. Es ist somit insbesondere nicht erforderlich, dass die Umlenktrommel streng zylindrisch gestaltet ist.

Es wird als besonders vorteilhaft angesehen, wenn die Stärke der Platte maximal der Stärke der der Platte benachbarten Deckschicht entspricht. Dies bedeutet, dass die Platte nicht über die Deckschicht hinaussteht, sondern in einem Rücksprung, der durch die entfernte Deckschicht gebildet ist, platziert ist. Hierdurch ergibt sich ein besonders gutes Verschleiß- und Geräuschverhalten der erfindungsgemäßen Verbindung.

Insbesondere bei Verwendung der Verbindung in einer Rundballenpresse weist der Fördergurt eine Breite von 150 bis 300 mm und/oder eine Stärke von 6 bis 12 mm auf. Das jeweilige Ende des Fördergurts ist insbesondere über eine Länge von 10 bis 30 mm, vorzugsweise 15-25 mm, freigelegt.

Zusätzlich können die freigelegten, überlappend angeordneten Enden des Fördergurts miteinander verklebt sein. Hierdurch lässt sich die erfindungsgemäße Verbindung optimieren.

Weitere Merkmale der Erfindung sind in den Unteransprüchen, der Beschreibung der Zeichnung sowie der Zeichnung selbst dargestellt, wobei bemerkt wird, dass alle Einzelmerkmale und alle Kombinationen von Einzelmerkmalen erfindungswesentlich sind.

In der Zeichnung ist ein Ausführungsbeispiel der Erfindung verdeutlicht, ohne hierauf beschränkt zu sein. Es zeigt:
- Figur 1: die erfindungsgemäß Verbindung zweier Enden eines Fördergurts, senkrecht zur Förderebene des Fördergurts geschnitten,
- Figur 2: eine Draufsicht auf die in Figur 1 dargestellte Verbindung gemäß Pfeil 11 in Figur 1,
- Figur 3: die Anordnung des mit der Verbindung versehenen Fördergurts und eine Umlenkrolle, an der der Fördergurt anliegt.

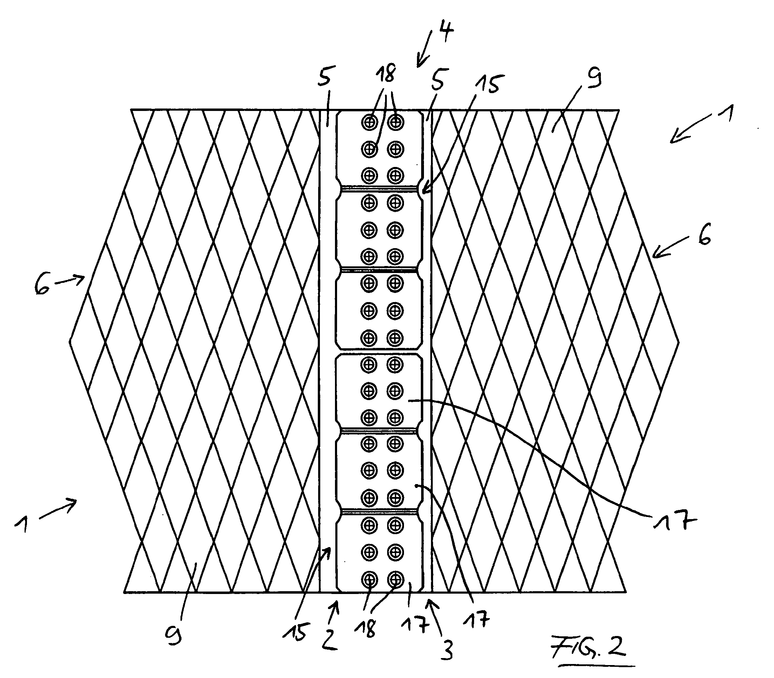

Der Fördergurt 1 weist zwei Enden 2 und 3 auf, die mittels einer Verbindung 4 miteinander verbunden sind. Diese Verbindung erstreckt sich, wie der Darstellung der Figur 2 zu entnehmen ist, über die gesamte Breite des Fördergurts 1.

Der Fördergurt 1 ist als Einlagengurt ausgebildet. Dessen eine Lage, eine mittlere Gewebelage aus Kunststoff, ist mit der Bezugsziffer 5 bezeichnet ist. Diese Gewebelage 5 ist mit einer, bezogen auf die Orientierung der Figuren, oberen Deckschicht 6 und einer unteren Deckschicht 7 abgedeckt. Die Gewebelage 5 und die beiden Deckschichten 6 und 7 sind somit fest miteinander verbunden. Die beiden Deckschichten 6 und 7 bestehen aus Gummi. Die untere Deckschicht 7 ist ein solider Gummi, ferner der an die Gewebelage 5 angrenzende Deckschichtbereich 8 der oberen Deckschicht 6. Auf der der Gewebelage 5 abgewandten Seite des Deckschichtbereichs 8 grenzt an diesen ein profilierter, insbesondere rautenförmiger Deckschichtbereich 9 der oberen Deckschicht 6. Dieser rautenförmige Deckschichtbereich 9 ist insbesondere der Figur 2 zu entnehmen. Der Übergang zwischen den Deckschichtbereichen 8 und 9 ist mit der strichlierten Linie 10 verdeutlicht.

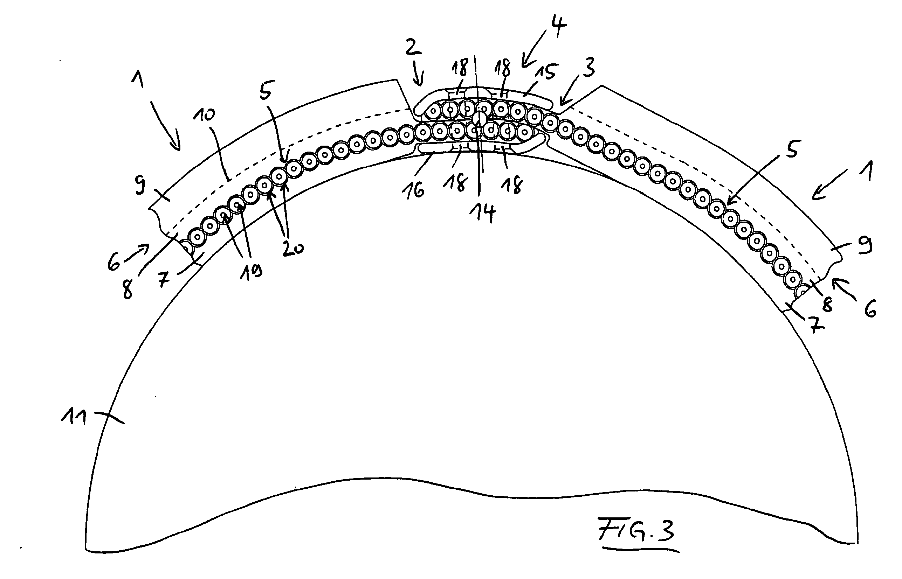

Die Stärke der oberen Deckschicht 6 ist somit größer als die der unteren Deckschicht 7. Im Ausführungsbeispiel liegt, wie es der Darstellung der Figur 3 zu entnehmen ist, der Fördergurt 1 im Bereich der unteren Deckschicht 7 an einer Umlenktrommel 11, die Bestandteil einer Rundballenpresse bildet, an. Diese Umlenktrommel 11 ist nur über einen Kreissektor veranschaulicht. In der Rundballenpresse sind eine Vielzahl von Umlenktrommeln 11 gelagert, so dass der Fördergurt 1 durchaus auch im Bereich der oberen Deckschicht 6 mittels einer Umlenktrommel umgelenkt werden kann. Diese Umlenktrommel weist insbesondere einen Durchmesser auf, der dem Durchmesser der Umlenktrommel 11 entspricht.

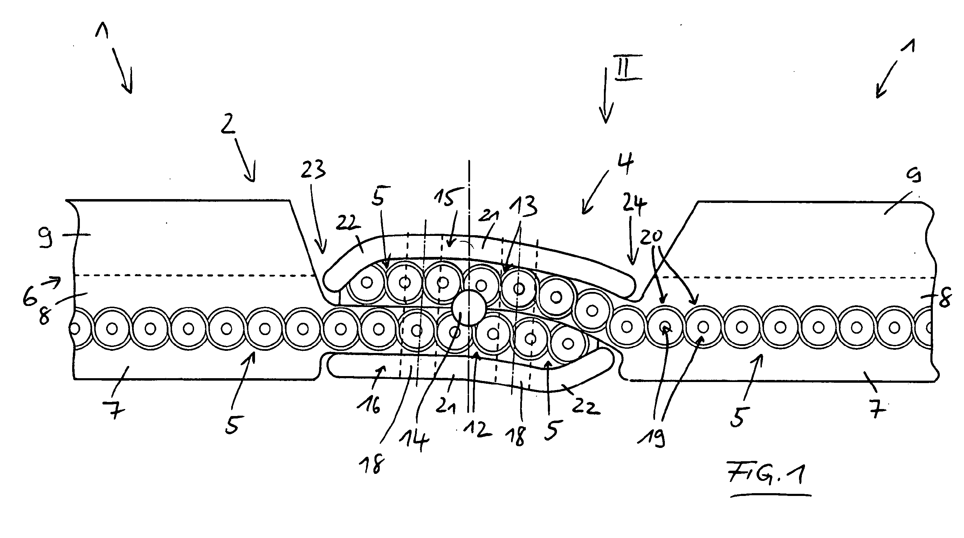

Im Bereich der Verbindung der beiden Enden des Fördergurts 1 ist die Gewebelage 5 durch Entfernen der Deckschichten 6 und 7 freigelegt und es sind die freigelegten Enden des Fördergurts, somit die freigelegte Gewebelage 5 überlappend angeordnet. Dies ist der Darstellung der Figuren 1 und 3 zu entnehmen. Hierbei überlappen sich die freigelegten Enden 2 und 3 des Fördergurts 1 vollständig, derart, dass der freigelegte Abschnitt 12 des Fördergurtendes 2 benachbart der zugewandten unteren Deckschicht 7 im Bereich des anderen Endes 3 des Fördergurts 1 positioniert ist und der freigelegte Abschnitt 13 des Endes 3 des Fördergurts 1 benachbart der zugewandten oberen Deckschicht 6 im Bereich des Endes 2 des Fördergurts 1 positioniert ist.

Zusätzlich ist zwischen die beiden Abschnitte 12 und 13 ein sich im Wesentlichen über die gesamte Breite des Fördergurts 1 erstreckender Metallstab oder Metallseil 14 eingelegt, der einen zusätzlichen Formschluss zwischen den Abschnitten 12 und 13 bewirkt.

Die beiden Abschnitte 12 und 13 sind zwischen oberen Platten 15 und unteren Platten 16 gepresst, die identisch ausgebildet sind. Wie der Darstellung der Figur 2 zu entnehmen ist, sind, der oberen Deckschicht 6 zugeordnet, zwei Platten 15 vorgesehen, die in Breitenerstreckung hintereinander angeordnet sind und sich im wesentlichen über die Breite des Fördergurts 1 erstrecken. Jede Platte 15 ist in drei Teilbereiche 17 unterteilt, zwischen denen die Wandstärke der Platte 15 geringfügig reduziert ist, um deren Biegesteifigkeit dort zu reduzieren, oder um jeweils eine Sollbruchstelle dort zu definieren, insbesondere bei Verwendung von balligen Umlenktrommeln, oder wenn Fördergut zwischen dem Fördergurt und die Umlenktrommel gelangen sollen. Jeder Plattenabschnitt 17 ist mit sechs Löchern versehen. Die unteren Platten 16 sind entsprechend den oberen Platten 15 ausgebildet. Durch die Löcher der Plattenabschnitte 16 und 17, die jeweils miteinander fluchten, sind Nieten 18 getrieben, die die beiden Abschnitte 12 und 13 der Gewebelage 5 durchsetzen. Aufgrund der Verwendung der Nieten 18 lässt sich eine relativ dünne Verbindung im Bereich der überlappenden Abschnitte 12 und 13 unter Berücksichtigung der Stärke der Platten 15 und 16 erzeugen. Die Platten 15 und 16 pressen die Abschnitte 12 und 13 aufeinander und es ist überdies der Stab 14 zwischen den Abschnitten 12 und 13 gepresst. Um bei der Gewebelage 5 eine Materialverdrängung der quer zur Laufrichtung des Fördergurts 1 verlaufenden Schussfäden 19 in Richtung der in Längsrichtung des Fördergurts 1 verlaufenden Kettfäden 20 zu minimieren, kann die jeweilige Platte 15 bzw. 16 beidseitig des Stabes 14 mit Sicken versehen sein, zur Bildung von Erhebungen, die sich in Richtung des Stabes 14 erstrecken.

Die im Wesentlichen eben gestaltete jeweilige Platte 15 bzw. 16 weist einen längeren, ebenen Bereich 21 und einen sich an diesen anschließenden, wesentlich kürzeren, gekrümmten Bereich 22 auf. Dieser gekrümmte Bereich 22 erstreckt sich hinter das freie Ende des jeweiligen Abschnittes 12 bzw. 13 und stellt damit sicher, dass das freie Ende des Abschnitts 12 bzw. 13 gegen den jeweiligen anderen Abschnitt 13 bzw. 12 gedrückt wird. Abgesehen davon ergibt sich aufgrund dieses gekrümmten Bereiches 22 ein besonders gutes Geräuschverhalten beim Umlauf des Fördergurts 1, somit beim Durchlauf des Fördergurts 1 mit der Verbindung 4 im Bereich der Umlenktrommel 11. Durch die erfindungsgemäße Gestaltung der Verbindung weist diese quasi ein Zweigelenk auf, mit den Gelenkbereichen 23 und 24.

Der Fördergurt 1 weist insbesondere eine Breite von 150 bis 300 mm und eine Stärke von 6 bis 12 mm auf. Das jeweilige Ende 2, 3 des Fördergurts 1 ist über eine Länge von 10 bis 30 mm, vorzugsweise 15 bis 25 mm, freigelegt.

## Patentansprüche

1. Verbindung (4) zweier Enden (2, 3) eines Fördergurts (1), wobei die Enden (2, 3) des Fördergurts (1), im Wesentlichen über die gesamte Breite des Fördergurts (1), mittels Platten (15, 16) verbunden sind und die Platten (15,16) auf der Ober- und Unterseite des Fördergurts (1) angeordnet sind, sowie mit Mitteln (18) zum Befestigen der Platten (15, 16) am Fördergurt (1), wobei die Befestigungsmittel (18) den Fördergurt (1) im Bereich dessen Enden (2, 3) durchsetzen und der Fördergurt (1) ein Einlagengurt ist, der eine mittlere Gewebelage (5) sowie eine obere (6) und eine untere Deckschicht (7) aufweist, sowie die Gewebelage (5) im Bereich der Enden (2, 3) des Fördergurts (1) durch Entfernen der Deckschichten (6, 7) freigelegt ist und die Enden (2, 3) des Fördergurts (1) überlappend angeordnet sind, **dadurch gekennzeichnet, dass** zwischen die freigelegten Enden (2, 3) des Fördergurts (1) mindestens ein Draht, Stab oder Seil (14) eingelegt ist, der in Breitenrichtung des Fördergurts (1) angeordnet ist.

2. Verbindung nach Anspruch 1, **dadurch gekennzeichnet, dass** die Deckschichten (6, 7) aus Gummi bestehen.

3. Verbindung nach Anspruch 1 oder 2, **dadurch gekennzeichnet, dass** die eine Deckschicht (6) eine größere Stärke aufweist als die andere Deckschicht (7).

4. Verbindung nach Anspruch 3, **dadurch gekennzeichnet, dass** die die größere Stärke aufweisende Deckschicht (6) auf der der Gewebelage (5) abgewandten Seite eine Profilierung (9), insbesondere eine rautenförmige Profilierung aufweist.

5. Verbindung nach einem der Ansprüche 1 bis 4, **dadurch gekennzeichnet, dass** sich die freigelegten Enden (2, 3) des Fördergurts (1) vollständig überlappen, derart, dass das jeweilige freigelegte eine Ende (2 bzw. 3) des Fördergurts (1) benachbart der zugewandten Deckschicht (7 bzw. 6) im Bereich des anderen Endes (3 bzw. 2) des Fördergurts (1) angeordnet ist.

6. Verbindung nach einem der Ansprüche 1 bis 5, **dadurch gekennzeichnet, dass** die Platten (15, 16) mittels Nieten (18), Schrauben, Krampen oder dergleichen miteinander verbunden sind.

7. Verbindung nach einem der Ansprüche 1 bis 6, **dadurch gekennzeichnet, dass** die jeweilige Platte (15 bzw. 16) aus Metall besteht.

8. Verbindung nach einem der Ansprüche 1 bis 7, **dadurch gekennzeichnet, dass** die jeweilige Platte (15, 16) im Wesentlichen eben ist, insbesondere in einem, bezogen auf die Laufrichtung des Fördergurts (1), vorlaufenden und/oder nachlaufenden Bereich einen zur Gurtmitte gerichteten gekrümmten Querschnitt (22) aufweist.

9. Verbindung nach einem der Ansprüche 1 bis 8, **dadurch gekennzeichnet, dass** die Platten (15, 16) die freigelegten Enden (2, 3) des Förder-gurts (1), bezogen auf die Längserstreckung des Fördergurts (1), vollständig abdecken.

10. Verbindung nach einem der Ansprüche 1 bis 9, **dadurch gekennzeichnet, dass** auf jeder Fördergurtseite mehrere Platten (15, 15; 16, 16) nebeneinander angeordnet sind.

11. Verbindung nach einem der Ansprüche 1 bis 10, **dadurch gekennzeichnet, dass** die Stärke der jeweiligen Platte (15, 16) maximal der Stärke der der Platte (15, 16) benachbarten Deckschicht (6, 7) entspricht.

12. Verbindung nach einem der Ansprüche 1 bis 11, **dadurch gekennzeichnet, dass** der Fördergurt (1) eine Breite von 150 bis 300 mm und/oder eine Stärke von 6 bis 12 mm aufweist.

13. Verbindung nach einem der Ansprüche 1 bis 12, **dadurch gekennzeichnet, dass** das jeweilige Ende (2, 3) des Fördergurts (1) über eine Länge von 10 bis 30 mm, vorzugsweise 15-25 mm, freigelegt ist.

14. Verbindung nach einem der Ansprüche 1 bis 13, **dadurch gekennzeichnet, dass** die überlappend angeordneten Enden (2, 3) des Fördergurts (1) miteinander verklebt sind.

15. Verwendung einer Verbindung nach einem der Ansprüche 1 bis 14 bei einer Rundballenpresse.

## Claims

1. Connection (4) between two ends (2, 3) of a conveyor belt (1), wherein the ends (2, 3) of the conveyor belt (1) are connected by means of plates (15, 16), essentially over the entire width of the conveyor belt (1), and the plates (15, 16) are arranged on the top side and underside of the conveyor belt (1), and having means (18) for fastening the plates (15, 16) to the conveyor belt (1), wherein the fastening means (18) pass through the conveyor belt (1) in the region of its ends (2, 3), and the conveyor belt (1) is a mono-ply belt which has a central fabric ply (5) and a top cover layer (6) and a bottom cover layer (7), and the fabric ply (5) is exposed in the region of the ends (2, 3) of the conveyor belt (1) by removing the cover layers (6, 7) and the ends (2, 3) of the conveyor belt (1) are arranged in an overlapping manner, **characterized in that** at least one wire, rod or cable (14) which is arranged in the width direction of the conveyor belt (1) is inserted between the exposed ends (2, 3) of the conveyor belt (1).

2. Connection according to Claim 1, **characterized in that** the cover layers (6, 7) are made of rubber.

3. Connection according to Claim 1 or 2, **characterized in that** the one cover layer (6) has a greater thickness than the other cover layer (7).

4. Connection according to Claim 3, **characterized in that** the cover layer (6) having the greater thickness has profiling (9), in particular a lozenge-shaped profiling, on the side facing away from the fabric ply (5).

5. Connection according to one of Claims 1 to 4, **characterized in that** the exposed ends (2, 3) of the conveyor belt (1) overlap completely in such a way that the respective exposed one end (2 or 3) of the conveyor belt (1) is arranged adjacent to the respective facing cover layer (7 or 6) in the region of the other end (3 or 2) of the conveyor belt (1).

6. Connection according to one of Claims 1 to 5, **characterized in that** the plates (15, 16) are connected to one another by means of rivets (18), screws, cramps or the like.

7. Connection according to one of Claims 1 to 6, **characterized in that** the respective plate (15 or 16) is made of metal.

8. Connection according to one of Claims 1 to 7, **characterized in that** the respective plate (15, 16) is essentially planar, in particular, in a leading and/or trailing region with respect to the running direction of the conveyor belt (1), has a curved cross section (22) directed toward the belt center.

9. Connection according to one of Claims 1 to 8, **characterized in that** the plates (15, 16) completely cover the exposed ends (2, 3) of the conveyor belt (1) with respect to the longitudinal extent of the conveyor belt (1).

10. Connection according to one of Claims 1 to 9, **characterized in that** a plurality of plates (15, 15; 16, 16) are arranged next to one another on each conveyor belt side.

11. Connection according to one of Claims 1 to 10, **characterized in that** the thickness of the respective plate (15, 16) corresponds at most to the thickness of the cover layer (6, 7) adjacent to the plate (15, 16).

12. Connection according to one of Claims 1 to 11, **characterized in that** the conveyor belt (1) has a width of 150 to 300 mm and/or a thickness of 6 to 12 mm.

13. Connection according to one of Claims 1 to 12, **characterized in that** the respective end (2, 3) of the conveyor belt (1) is exposed over a length of 10 to 30 mm, preferably 15-25 mm.

14. Connection according to one of Claims 1 to 13, **characterized in that** the ends (2, 3), arranged in an overlapping manner, of the conveyor belt (1) are adhesively bonded to one another.

15. Use of a connection according to one of Claims 1 to 14 in a round baler.

## Revendications

1. Connexion (4) de deux extrémités (2, 3) d'une courroie de transport (1), les extrémités (2, 3) de la courroie de transport (1), essentiellement sur toute la largeur de la courroie de transport (1), étant connectées au moyen de plaques (15, 16), et les plaques (15, 16) étant disposées sur le côté supérieur et inférieur de la courroie de transport (1), et comprenant des moyens (18) pour fixer les plaques (15, 16) sur la courroie de transport (1), les moyens de fixation (18) traversant la courroie de transport (1) dans la région de ses extrémités (2, 3) et la courroie de transport (1) étant une courroie monocouche, qui présente une couche de tissu centrale (5) ainsi qu'une couche de recouvrement supérieure (6) et une couche de recouvrement inférieure (7), la couche de tissu (5) étant exposée dans la région des extrémités (2, 3) de la courroie de transport (1) par enlèvement des couches de recouvrement (6, 7), et les extrémités (2, 3) de la courroie de transport (1) étant disposées de manière à se chevaucher, **caractérisée en ce qu'**entre les extrémités exposées (2, 3) de la courroie de transport (1) est introduit au moins un fil métallique, une barre ou un câble (14), qui est disposé dans la direction de la largeur de la courroie de transport (1).

2. Connexion selon la revendication 1, **caractérisée en ce que** les couches de recouvrement (6, 7) se composent de caoutchouc.

3. Connexion selon la revendication 1 ou 2, **caractérisée en ce que** l'une des couches de recouvrement (6) présente une plus grande épaisseur que l'autre couche de recouvrement (7).

4. Connexion selon la revendication 3, **caractérisée en ce que** la couche de recouvrement (6) présentant la plus grande épaisseur, du côté opposé à la couche de tissu (5), présente un profilage (9), notamment un profilage en rhombiforme.

5. Connexion selon l'une quelconque des revendications 1 à 4, **caractérisée en ce que** les extrémités exposées (2, 3) de la courroie de transport (1) se chevauchent complètement, de telle sorte que l'une respective des extrémités exposées (2 ou 3) de la courroie de transport (1) soit disposée à côté de la couche de recouvrement tournée vers elle (7 ou 6) dans la région de l'autre extrémité (3 ou 2) de la courroie de transport (1).

6. Connexion selon l'une quelconque des revendications 1 à 5, **caractérisée en ce que** les plaques (15, 16) sont connectées l'une à l'autre au moyen de rivets (18), vis, crampons ou similaires.

7. Connexion selon l'une quelconque des revendications 1 à 6, **caractérisée en ce que** la plaque respective (15 ou 16) se compose de métal.

8. Connexion selon l'une quelconque des revendications 1 à 7, **caractérisée en ce que** la plaque respective (15, 16) est essentiellement plane, notamment présente, dans une région amont et/ou aval, par rapport au sens d'avance de la courroie de transport (1), une section transversale (22) de courbure orientée vers le centre de la courroie.

9. Connexion selon l'une quelconque des revendications 1 à 8, **caractérisée en ce que** les plaques (15, 16) recouvrent complètement les extrémités exposées (2, 3) de la courroie de transport (1), par rapport à l'étendue longitudinale de la courroie de transport (1).

10. Connexion selon l'une quelconque des revendications 1 à 9, **caractérisée en ce que** plusieurs plaques (15, 15 ; 16, 16) sont disposées les unes à côté des autres sur chaque côté de la courroie de transport.

11. Connexion selon l'une quelconque des revendications 1 à 10, **caractérisée en ce que** l'épaisseur de la plaque respective (15, 16) correspond au maximum à l'épaisseur de la couche de recouvrement (6, 7) adjacente à la plaque (15, 16).

12. Connexion selon l'une quelconque des revendications 1 à 11, **caractérisée en ce que** la courroie de transport (1) présente une largeur de 150 à 300 mm, et/ou une épaisseur de 6 à 12 mm.

13. Connexion selon l'une quelconque des revendications 1 à 12, **caractérisée en ce que** l'extrémité respective (2, 3) de la courroie de transport (1) est exposée sur une longueur de 10 à 30 mm, de préférence de 15 à 25 mm.

14. Connexion selon l'une quelconque des revendications 1 à 13, **caractérisée en ce que** les
extrémités (2, 3) de la courroie de transport (1) disposées de manière à se chevaucher sont collées ensemble.

15. Utilisation d'une connexion selon l'une quelconque des revendications 1 à 14 dans une presse à balles rondes.
